# FASCICULE DE BREVET EUROPEEN

(11) **EP 3 188 837 B1**
(45) Date de publication et mention de la délivrance du brevet: **25.07.2018**
(21) Numéro de dépôt: 15759774.1
(22) Date de dépôt: 04.09.2015
(51) Int. Cl.: B01L 3/00, G01N 27/447, G01N 30/28

(54) **DISPOSITIF ET PROCÉDÉ D'ANALYSE MICROFLUIDIQUE**
MIKROFLUIDISCHE ANALYSEVORRICHTUNG UND -VERFAHREN
MICROFLUIDIC ANALYSIS DEVICE AND METHOD

(30) Priorité: 05.09.2014 FR 1458333
(43) Date de publication de la demande: 12.07.2017
(73) Titulaire: Centre National de la Recherche Scientifique (CNRS), 75016 Paris (FR); Universite Paris-Sud, 91400 Orsay (FR)
(72) Inventeur: HAGHIRI-GOSNET, Anne-Marie, F-92330 Sceaux (FR); PALLANDRE, Antoine, F-92330 Sceaux (FR); GAMBY, Jean, F-93400 Saint Ouen (FR); ROSE, Daniel, F-77157 Everly (FR); MEANCE, Sébastien, F-31000 Toulouse (FR)
(74) Mandataire: Regimbeau
(86) Numéro de dépôt international: PCT/EP2015/070211
(87) Numéro de publication internationale: WO 2016/034696

(56) Documents cités:
- WO-A1-00/28315
- WO-A1-2010/052387
- US-A- 5 092 972
- US-A- 5 320 730

## Description

### DOMAINE DE L'INVENTION

L'invention concerne le domaine des dispositifs d'analyse microfluidique exploitant la compétition des mobilités électrophorétique et électroosmotique.

### ETAT DE LA TECHNIQUE

On connait des dispositifs d'analyse microfluidique adaptés pour trier des particules et molécules en exploitant la compétition des mobilités électrophorétique et électroosmotique.

Ces dispositifs d'analyse microfluidique utilisent un réseau microfluidique dans lequel sont injectés un électrolyte et un échantillon renfermant des analytes.

Ce réseau comporte un certain nombre de réservoirs reliés à au moins un long canal de séparation et/ou à un réseau de microcanaux présentant des intersections agencées particulièrement, et ce, pour permettre l'injection d'une certaine quantité d'analytes dans le un canal de séparation.

Les parois du canal de séparation sont recouvertes d'une surface polarisable qui est constituée d'une couche métallique recouverte d'un isolant. Une tension de polarisation est appliquée à la couche métallique de manière à moduler la charge de surface au travers de l'isolant au niveau de l'interface avec le liquide. Ces dispositifs sont communément appelés transistors à interface polarisable métal/isolant.

Le procédé mis en oeuvre dans ces dispositifs d'analyse microfluidique consiste à appliquer un champ électrique longitudinal au canal aux bornes d'électrodes de champ longitudinal disposées de part et d'autre du canal de séparation. Sous l'effet d'un champ électrique, les particules chargées se déplacent dans l'électrolyte. On parle de migration électrophorétique ou d'électrophorèse.

Sur les parois du canal de séparation, une double couche ionique formée d'une couche d'ions fixe, correspondant à la charge de surface, et d'une couche d'ions mobile, correspondant à une couche diffuse dans l'électrolyte, se forme spontanément. Sous le champ électrique longitudinal, les ions de la couche mobile migrent, entraînant un mouvement global de l'électrolyte par électroosmose. On parle de flux électroosmotique.

L'action concomitante de la migration électrophorétique (liée à la charge et à la taille des molécules ou particules dans l'électrolyte) et du flux électroosmotique (vitesse de l'électrolyte) assure le transport des molécules et particules contenues dans l'électrolyte à travers le canal de séparation.

Les dispositifs d'analyse microfluidique de l'art antérieur permettent ainsi de séparer les particules en fonction de leur masse et de leur charge.

Les dispositifs d'analyse microfluidique de l'art antérieur présentent cependant deux inconvénients principaux.

Premièrement, du fait de la couche isolante recouvrant la surface polarisable, il faut appliquer une différence de potentiel entre l'électrolyte et la surface polarisable relativement importante pour gérer une modulation suffisante de la charge de surface de l'interface polarisable. L'application d'une importante différence de potentiel entre l'électrolyte et la surface polarisable déclenche des réactions électrochimiques qui génèrent des dégagements gazeux susceptibles de détériorer la surface polarisable.

Deuxièmement, l'isolant en contact avec l'électrolyte est sujet à une dégradation physique qui peut ensuite donner lieu à d'importants courants de fuite entre la surface polarisable et les électrodes de champ longitudinal, ce qui empêche le contrôle de la charge de surface de l'interface polarisable.

### EXPOSE DE L'INVENTION

L'invention permet de pallier au moins un des inconvénients précités et notamment permet de limiter les courants de fuite entre la surface polarisable et les électrodes de champ longitudinal et donc d'améliorer le contrôle de la charge de surface polarisable.

A cet effet, l'invention propose un dispositif d'analyse microfluidique comportant :
- un substrat dans lequel est ménagé un canal de séparation dans lequel circule un électrolyte, une partie du canal de séparation étant recouvert d'une surface polarisable ;
- deux électrodes de champ longitudinal disposées de part et d'autre du canal de séparation ;
- au moins une électrode de commande (positionnée dans le canal de séparation, les électrodes de commande étant adaptées pour polariser la surface polarisable de manière à contrôler la vitesse du flux électroosmotique dans le canal de séparation ;
le dispositif d'analyse microfluidique étant caractérisé en ce que la surface polarisable comporte une sous-couche isolante en carbure de silicium amorphe et une couche polarisable supérieure en contact direct avec l'électrolyte, les électrodes de commande étant positionnées entre la sous-couche isolante en carbure de silicium amorphe et la couche polarisable supérieure.

Le dispositif d'analyse microfluidique selon l'invention permet de mesurer la vitesse des analytes dans le canal de séparation, ou plus précisément la contribution électroosmotique du transport de particules ou molécules, qui est directement liée à la charge de surface du canal.

L'invention permet de piloter en temps réel la vitesse des analytes circulant dans le canal de séparation.

L'association de la sous-couche isolante en carbure de silicium amorphe et de la couche polarisable supérieure permet de limiter la différence de potentiel à appliquer entre l'électrolyte et la surface polarisable pour générer une modulation de la charge de surface de la couche polarisable supérieure.

L'invention permet donc de contrôler de manière optimisée la charge de surface en évitant les réactions électrochimiques susceptibles de générer des dégagements gazeux.

L'invention permet donc une optimisation de la séparation ou du tri par le contrôle du flux électroosmotique en maximisant la résolution du procédé d'analyse microfluidique

Les inventeurs ont mis en évidence que, lorsque la couche polarisable supérieure est directement déposée sur le substrat en verre, comme décrit dans le document WO 2010/052387, il existe des courants de fuite entre la surface polarisable et les électrodes de champ longitudinal.

En effet, la couche polarisable supérieure (en particulier lorsqu'elle est en carbone azoté CNx et déposée par la méthode de pulvérisation cathodique), est trop contrainte pour adhérer directement au verre. La mauvaise adhésion de la couche polarisable supérieure sur le substrat en verre explique l'existence de ces courants de fuite entre la surface polarisable et les électrodes de champ longitudinal.

La sous-couche isolante en carbure de silicium amorphe en favorisant l'accroche de la couche polarisable supérieure permet de limiter les courants de fuite entre la surface polarisable et les électrodes de champ longitudinal.

En effet, le carbure de silicium amorphe est compatible à la fois avec le substrat et avec la couche polarisable supérieure, ce qui permet l'adhésion de deux matériaux à priori directement incompatibles.

En particulier lorsque, le substrat est en verre et la couche polarisable supérieure en carbone azoté, la surface de verre est riche en silicium et en oxygène alors que le carbone azoté CNx contient du carbone et de l'azote. La sous-couche en carbure de silicium amorphe ayant des éléments communs avec d'une part le substrat en verre et d'autre part avec le carbone azoté CNx, elle favorise l'adhésion indirecte du carbone azoté CNx sur le verre.

En outre, les inventeurs ont mis en évidence par microscopie de force atomique que la rugosité (en particulier la rugosité RMS (Roughness mean square)) d'une surface en carbure de silicium amorphe a-SiC et celle d'une surface en carbone azoté CNx sont très proches et donc que l'interface de a-SiC/CNx présente d'un point vue topographique une très bonne compatibilité.

La présence d'une sous-couche en carbure de silicium amorphe a-SiC, qui est un matériau amorphe dense et isolant électriquement (la résistivité de la sous-couche isolante en carbure de silicium amorphe a-SiC est typiquement égale à 2x10³ Ohms.cm) permet la polarisation de la couche polarisable supérieure tout en limitant les courants de fuite entre la surface polarisable et les électrodes de champ longitudinal. La présence d'une sous-couche en carbure de silicium amorphe a-SiC permet typiquement de réduire les courants de fuite à moins de 1 nanoampère.

Les inventeurs ont de plus constaté que si l'on utilise une sous-couche ayant une conductivité électrique supérieure au CNx, comme l'ITO (indium titane oxide) et l'aluminium, la majorité du courant passe par la sous-couche, ce qui a pour conséquence un dégagement de chaleur par effet Joule. Une sous-couche en carbure de silicium amorphe a-SiC ne présente pas cet inconvénient.

L'invention est avantageusement complétée par les caractéristiques suivantes, prises individuellement ou en l'une quelconque de leurs combinaisons techniquement possibles.

La couche polarisable supérieure est en carbone azoté CNx.

Le dispositif d'analyse microfluidique comporte en outre :
- une électrode de référence adaptée pour mesurer le potentiel de l'électrolyte dans le canal de séparation ;
- un circuit de contrôle adapté pour ajuster le potentiel de l'électrode de commande en fonction du potentiel de l'électrolyte mesuré par l'électrode de référence, de manière à ce que la surface polarisable reste dans sa fenêtre de polarisabilité.

L'électrode de référence et le circuit de contrôle permettent de limiter les courants de fuite entre les électrodes de commandes et les électrodes de champ longitudinal qui nuisent au contrôle et à qualité du transport des analytes lors du processus de migration électrophorétique.

Le circuit de contrôle est adapté pour imposer une différence de potentiel fixe entre l'électrode de commande et l'électrode de référence.

Le dispositif d'analyse microfluidique comporte :
- une électrode de commande amont positionnée en amont du canal ;
- une électrode de commande aval positionnée en aval du canal ;
- une électrode de référence amont positionnée en amont du canal ;
- une électrode de référence aval positionnée en aval du canal ;
l'électrode de commande amont est connectée par un circuit de contrôle amont à l'électrode de référence amont, l'électrode de commande aval étant connectée par un circuit de contrôle aval à l'électrode de référence aval, le circuit de contrôle amont étant adapté pour ajuster le potentiel des électrodes de commande en fonction du potentiel de l'électrolyte mesuré par les électrodes de référence, de manière à ce que la surface polarisable reste dans sa fenêtre de polarisabilité.

L'utilisation conjointe de la sous-couche en SiC et des circuits de contrôle permet de limiter les courants de fuite entre la surface polarisable et les électrodes de champ longitudinal.

Le circuit de contrôle aval est connecté à une masse flottante référencée à l'électrode de référence aval.

Le fait de mesurer la valeur du potentiel de l'électrolyte par rapport à la masse secteur permet de limiter la tension de mode commun dans le circuit de contrôle aval.

Le circuit de contrôle aval comportant un premier amplificateur opérationnel, et un second amplificateur opérationnel, l'électrode de référence aval est connectée entre l'entrée non-inverseuse du premier amplificateur opérationnel et la masse flottante, et l'électrode de commande aval étant connectée entre l'entrée non-inverseuse du second amplificateur opérationnel et la masse flottante.

L'invention concerne également un procédé d'analyse microfluidique mis en oeuvre par un dispositif d'analyse microfluidique comportant des étapes de :
- injection d'un électrolyte contenant des analytes dans le canal de séparation ;
- génération d'un champ longitudinal dans le canal de séparation ;
- polarisation de la surface polarisable par application d'une tension de polarisation aux bornes des électrodes de commande ;
- contrôle de la vitesse du flux électroosmotique dans le canal de séparation par modulation de la tension de polarisation aux bornes des électrodes de commande.

Au cours de l'étape de contrôle de la vitesse du flux électroosmotique dans le canal de séparation, on impose une différence de potentiel fixe entre l'électrode de commande et l'électrode de référence.

Au cours de l'étape de contrôle de la vitesse du flux électroosmotique dans le canal de séparation, on impose une différence de potentiel fixe entre l'électrode de commande amont et l'électrode de référence amont, et entre l'électrode de commande aval et l'électrode de référence aval.

### DESCRIPTION DES FIGURES

D'autres objectifs, caractéristiques et avantages sortiront de la description détaillée qui suit en référence aux dessins donnés à titre illustratif et non limitatif parmi lesquels :
- la figure 1 est une représentation schématique d'un dispositif conforme à l'invention ;
- la figure 2 est une vue du réseau fluidique du dispositif de la figure 1 ;
- la figure 3 est une vue rapprochée du canal de séparation ;

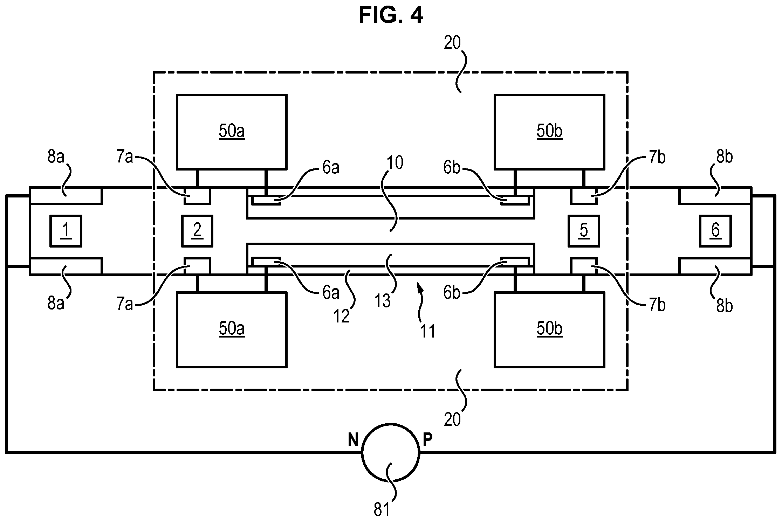

- la figure 4 est une représentation schématique du canal de séparation et des connections destinées à être reliées au circuit de contrôle ;
- la figure 5 est une représentation schématique d'un exemple de circuit de contrôle fonctionnant sur secteur ;
- la figure 6 est une représentation schématique d'un exemple de circuit de contrôle fonctionnant sur batterie.

### DESCRIPTION DETAILLEE DE L'INVENTION

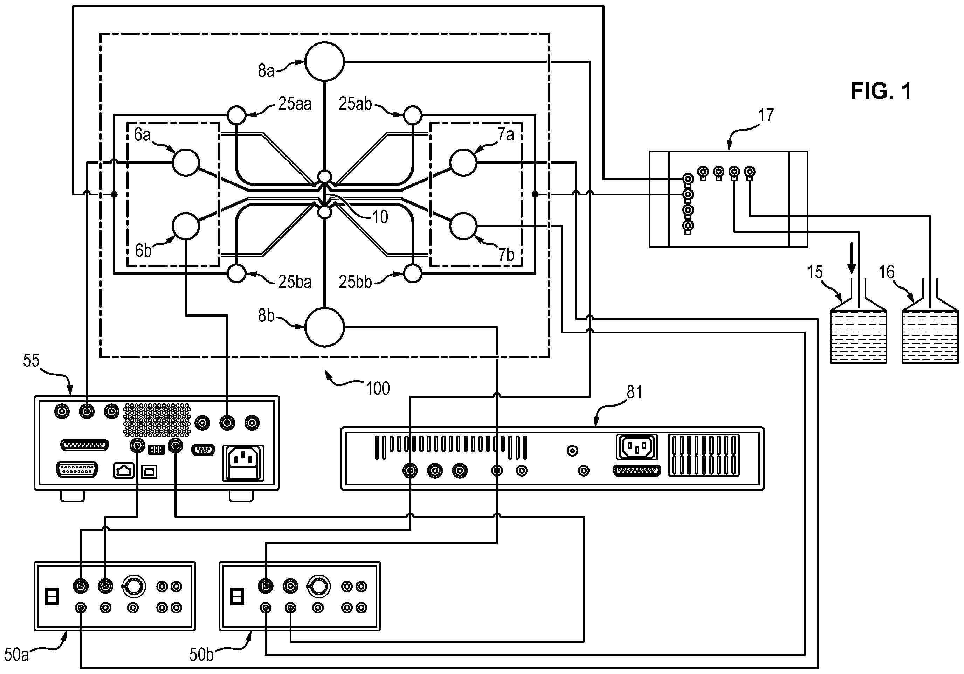

En référence aux figures 1 à 3, un dispositif d'analyse microfluidique 1 comprend un réseau fluidique 100 réalisé dans un substrat 20 en verre ou en matière plastique.

### Le réseau fluidique 100

Le réseau fluidique 100 comporte :
- un récipient de réserve 15
- un récipient de stockage 16.
- un réservoir secondaire amont droit 25aa,
- un réservoir secondaire amont gauche 25ab,
- un réservoir secondaire aval droit 25ba,
- un réservoir secondaire aval gauche 25bb,
- un réservoir amont 9a,
- un réservoir aval 9b,
- un canal de séparation 10.

### Récipient réserve 15 sous pression d'air et un deuxième récipient de stockage 16

En référence à la figure 1, le réseau fluidique 100 comporte un récipient réserve 15 contenant un électrolyte contenant des analytes, et un deuxième récipient de stockage 16 adapté pour recevoir l'électrolyte en sortie du réseau fluidique 100.

L'électrolyte est par exemple du chlorure de KCl ou n'importe quel tampon biologique.

Les analytes peuvent notamment être :
- des particules comme des billes de taille micro ou nanométrique pouvant être magnétiques ou non, fonctionnalisées chimiquement ou par des biomolécules, ou par une combinaison des deux ;
- des molécules et des éléments chimiques comme des biomolécules (ADN, ARN, peptides, protéines), ions, polluants, polymères, ou radioéléments ; et
- des bactéries, des virus et des cellules de manière générale.

Le récipient réserve 15 est sous pression d'azote, typiquement sous une pression de l'ordre de 1 bar.

Le récipient réserve 15 et le récipient de stockage 16 sont reliés à un système matriciel d'électrovannes 17 permettant de commander l'introduction de l'électrolyte dans le réseau fluidique 100, par le biais d'une pression hydrodynamique mesurée par un manomètre.

### Réservoirs secondaires 25aa, 25ab, 25ba, 25bb

Le récipient de réserve 15 est adapté pour être alternativement relié d'une part au réservoir secondaire amont droit 25aa et au réservoir secondaire aval droit 25ba et d'autre part au réservoir secondaire amont gauche 25ab, et au réservoir secondaire aval gauche 25bb.

Le récipient de stockage 16 est également adapté pour être alternativement relié d'une part au réservoir secondaire amont droit 25aa et au réservoir secondaire aval droit 26ba et d'autre part au réservoir secondaire amont gauche 25ab, et au réservoir secondaire aval gauche 25bb.

### Réservoirs 9a et 9b

Le réseau fluidique 100 comporte un réservoir amont 9a et un réservoir aval 9b.

Les réservoirs 9a et 9b permettent l'injection d'une certaine quantité d'analytes dans le canal de séparation 10.

Le réservoir amont 9a est relié au réservoir secondaire amont droit 25aa et au réservoir secondaire amont gauche 25ba par des canaux de raccordement 35aa et 35ba. Le réservoir aval 9b est relié au réservoir secondaire aval droit 25ab et au réservoir secondaire aval gauche 25bb par des canaux de raccordement 35ab et 35bb.

Les canaux de raccordement 35aa, 35ab, 35ba et 35bb ont des angles arrondis et deux rétrécissements de section, de manière à limiter la présence de bulles d'air.

### Canal de séparation 10

Le canal de séparation 10 relie le réservoir de champ longitudinal amont 9a et le réservoir de champ longitudinal aval 9b.

Le canal de séparation 10 est de section typiquement rectangulaire.

Les dimensions typiques pour le canal de séparation 10 sont 5 000 micromètres de longueur et 250 micromètres de largeur.

### Circuit de génération d'un champ longitudinal dans le canal de séparation 10

Comme illustré sur la figure 1, le dispositif de mesure microfluidique 1 comporte un circuit de génération d'un champ longitudinal dans le canal de séparation 10.

Le circuit de génération du champ longitudinal comporte au moins une première et une seconde électrodes de champ longitudinal 8a, 8b alimentées par un générateur de tension du champ électrique longitudinal 81.

Le générateur du champ électrique longitudinal 81 est limité en courant pour prévenir toute fuite de courant qui dégraderait la couche polarisable supérieure 11.

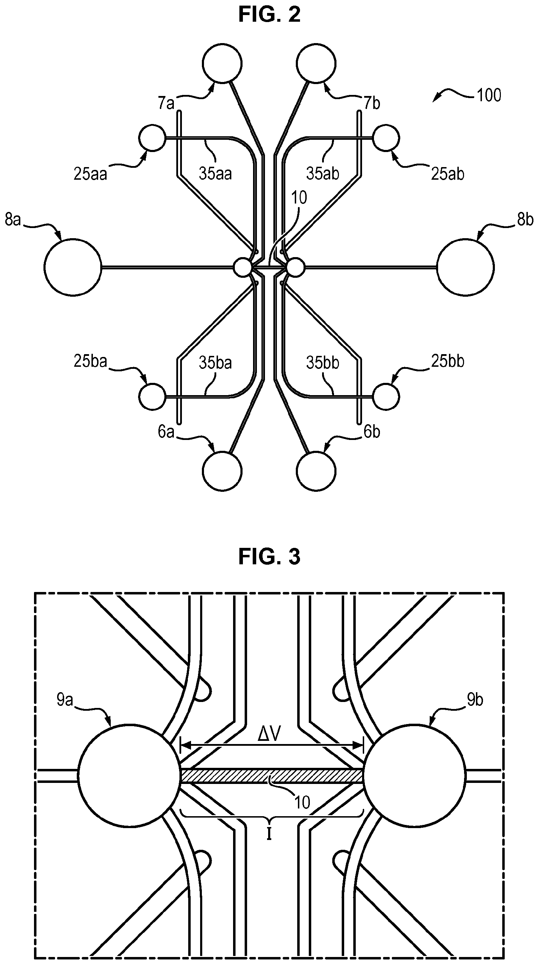

Comme illustré sur la figure 3, les électrodes de champ longitudinal 8a, 8b sont chacune connectée à l'un des réservoirs de champ longitudinal (respectivement 9a et 9b) et sont aptes à générer un champ électrique dans le l'électrolyte.

Les électrodes de champ longitudinal 8a, 8b sont par exemple des électrodes macroscopiques placées dans des réservoirs, ou des microélectrodes placées dans le réseau fluidique.

### Surface polarisable 11

Une partie du canal de séparation 10 est recouvert d'une surface polarisable 11.

La surface polarisable 11 comporte une sous-couche isolante 12 et une couche polarisable supérieure 13. La couche polarisable supérieure 13 est en contact direct avec l'électrolyte.

La sous-couche isolante 12 est en carbure de silicium amorphe a-SiC.

La couche polarisable supérieure 13 est typiquement en carbone azoté CNx.

La sous-couche isolante 12 en SiC a typiquement une épaisseur voisine de 30nm, tandis que la couche polarisable supérieure 13 a une épaisseur comprise entre 90 nm et 200 nm.

L'association de la sous-couche isolante 12 et de la couche polarisable supérieure 13 et en particulier le fait que la couche polarisable supérieure 13 soit en contact direct avec l'électrolyte permet de limiter la différence de potentiel à appliquer entre l'électrolyte et la surface polarisable 11 pour générer une modulation de la charge de surface de la couche polarisable supérieure 11. L'invention permet donc de contrôler de manière optimisée la charge de surface en évitant les réactions électrochimiques susceptibles de générer des dégagements gazeux.

Par ailleurs, la sous-couche isolante 12 en carbure de silicium amorphe a-SiC favorise l'accroche de la couche polarisable supérieure 13.

Par ailleurs, elle joue un rôle d'isolant parfait qui contribue à réduire les courants de fuite entre la surface polarisable et les électrodes de champ longitudinal. La résistivité de la sous-couche isolante 12 en carbure de silicium amorphe a-SiC est typiquement égale à 2x10³ Ohms.cm.

En présence de la sous-couche isolante 12, les courants de fuite entre la surface polarisable 11 et les électrodes de champ longitudinal 8a, 8b sont typiquement inférieurs d'un facteur mille aux courants délivrés par les électrodes de champ longitudinal 8a, 8b. Les courants de fuite entre la surface polarisable 11 et les électrodes de champ longitudinal 8a, 8b sont typiquement de l'ordre de 5 nanoampères.

### Electrodes de commande 6a, 6b

Le dispositif comprend une ou plusieurs électrodes de commande 6a, 6b adaptées pour polariser la surface polarisable 11.

Le dispositif comprend avantageusement au moins une électrode de commande amont 6a, et une électrode de commande aval 6b chacune connectée à une des extrémités de la surface polarisable 11.

L'électrode de commande amont 6a est positionnée à l'extrémité amont du canal de séparation 10. L'électrode de commande aval 6b est positionnée à l'extrémité aval du canal de séparation 10.

Les électrodes de commande 6a, 6b sont positionnées entre la sous-couche isolante 12 et la couche polarisable supérieure 13.

Les électrodes de commande 6a, 6b sont typiquement en Platine.

### Electrodes de référence 7a, 7b

Le dispositif de mesure microfluidique 1 comprend des électrodes de référence 7a, 7b adaptées pour mesurer le potentiel de l'électrolyte.

L'électrode de référence amont 7a est située en amont de la couche polarisable supérieure 11 en contact direct avec l'électrolyte et mesure le potentiel en amont de la surface polarisable 11. L'électrode de référence aval 7b est située en aval de la couche polarisable supérieure 11 en contact direct avec l'électrolyte et mesure le potentiel en aval de la surface polarisable 11.

Les électrodes de référence 7a, 7b sont typiquement en Platine ou AgCl.

### Circuit de contrôle 50a et 50b

Le dispositif comprend en outre des circuits de contrôle amont 50a et aval 50b, chacune des électrodes de référence 7a, 7b étant connectée à l'une des électrodes de commande 6a, 6b par l'intermédiaire d'un circuit de contrôle 50a ou 50b.

Chacun des circuits de contrôle 50a et 50b est alimenté par une alimentation haute tension 55.

L'électrode de commande amont 6a est connectée par un circuit de contrôle amont 50a à l'électrode de référence amont 7a, tandis que l'électrode de commande aval 6b est connectée par un circuit de contrôle aval 50b à l'électrode de référence aval 7b.

Les circuits de contrôle 50a et 50b ajustent le potentiel des électrodes de commande 6a, 6b en fonction du potentiel de l'électrolyte mesuré par les électrodes de référence 7a, 7b, de manière à ce que la surface polarisable 11 reste dans sa fenêtre de polarisabilité.

La fenêtre de polarisabilité d'une surface polarisable est la gamme de potentiel dans laquelle l'électrode, en présence du solvant et de l'électrolyte support ou tampon, ne donne aucun courant de transfert de charge (ou courant faradique) à l'interface électrode/ solution, et ce quelque soit le potentiel appliqué.

Le domaine est limité par deux valeurs de potentiel constituant « le mur du solvant » c'est-à-dire du côté anodique, l'oxydation du solvant, et du côté cathodique, la réduction du solvant. Dans le cas d'un solvant aqueux comme un tampon biologique, le domaine de courant faradique nul est limité par l'oxydation de l'eau en O₂ et la réduction de l'eau ou des protons en H₂. Dans le cas de solutions de KCl concentrées l'oxydation des ions chlorures en Cl₂ peut limiter le domaine de polarisabilité du côté anodique. Dans le cas d'une sous-couche isolante 12 en carbure de silicium amorphe a-SiC, la fenêtre de polarisabilité de la surface polarisable 11 en carbone azoté CNx est de 4V c'est-à-dire un domaine de potentiel compris entre -2V et +2V.

Le potentiel d'électrophorèse dans le canal de séparation 10 est directement mesurée par les électrodes de référence 7a, 7b, ce qui limite les écarts de potentiel entre l'électrolyte et la surface polarisable 11 et donc les courant de fuite entre la surface polarisable 11 et les électrodes de champ longitudinal 8a, 8b.

La difficulté de la mesure de potentiel entre l'électrolyte et la surface polarisable 11 réside dans le fait qu'il faut mesurer une différence de potentiel dont la tension de mode commun est supérieure à la tension d'alimentation des amplificateurs opérationnels constituant le circuit de contrôle 50b.

En effet, lors d'une mesure d'électrophorèse, la tension de mode commun au niveau de l'électrode de commande aval 7b est de l'ordre de 10 à 100 Volts, tandis que la tension d'alimentation des amplificateurs opérationnels est de l'ordre de -2 à 2 Volts. Les amplificateurs opérationnels ne peuvent pas supporter une telle tension de mode commun.

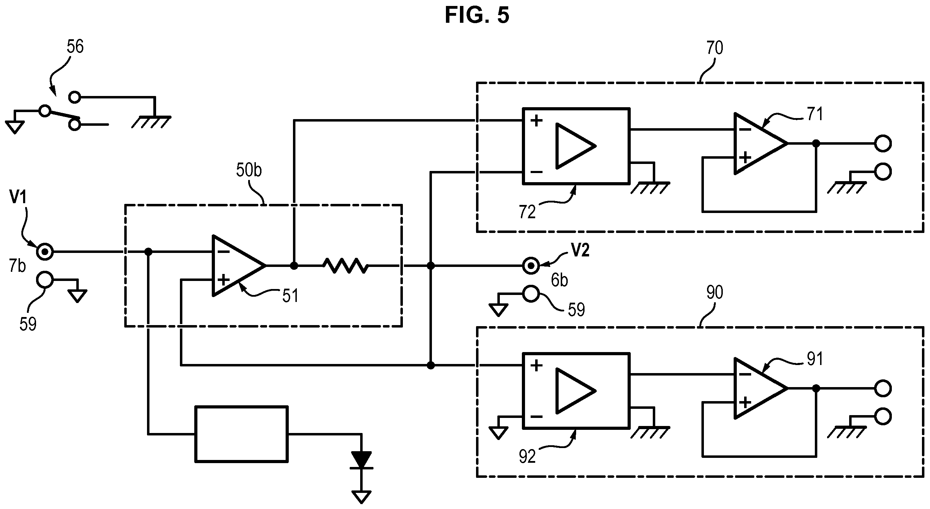

Le circuit de contrôle aval 50b fonctionnant sur secteur est décrit plus en détail ci-dessous en référence à la figure 5.

Pour résoudre cette difficulté, le circuit de contrôle aval 50b connecté à l'électrode de commande aval 6b est référencé à une masse flottante 59 elle-même référencée sur l'électrode de référence aval 7b (figure 5). Le circuit de contrôle amont 50a connecté à l'électrode de commande amont 6a est quant à lui référencé à la masse du secteur.

A cet effet, l'entrée du circuit de contrôle aval 50b connecté à l'électrode de commande aval 6b est connectée à la borne positive de l'alimentation haute tension 55.

Le fait de reporter la valeur du potentiel, mesurée par rapport à une masse flottante 59, à une valeur par rapport à la masse secteur permet de limiter la tension de mode commun dans le circuit de contrôle aval 50b.

Un interrupteur 56 permet avantageusement de choisir le mode de fonctionnement du circuit de contrôle 50b entre deux modes de fonctionnement, un premier mode de fonctionnement dans lequel le circuit de contrôle 50b est référencé à la masse du secteur, et un second mode de fonctionnement dans lequel le circuit de contrôle 50b est référencé à une masse flottante 59.

En référence à la figure 5, le dispositif d'analyse microfluidique 1 peut en outre comporter un circuit de mesure du courant 70 et un circuit de mesure du potentiel 90.

### Circuit de mesure du courant 70

Le circuit de mesure du courant 70 comporte une résistance de mesure 72 et un amplificateur opérationnel 71 dont l'entrée inverseuse est reliée à l'électrode de référence 6a ou 6b et l'entrée non-inverseuse est reliée à la sortie du premier amplificateur opérationnel 51.

Un interrupteur permet de sélectionner la valeur de la résistance de mesure 72entre 1kΩ, 10kΩ, 100kΩ et 1 MΩ afin d'affiner les mesures des courants de manière à changer la valeur du gain d'amplification du signal mesuré.

### Circuit de mesure du potentiel 90

Le circuit de mesure du potentiel 90 comporte un amplificateur opérationnel 91 dont l'entrée inverseuse est reliée à l'entrée non-inverseuse du premier amplificateur opérationnel 51 et dont l'entrée non-inverseuse est reliée à la masse flottante 59.

Le circuit de contrôle amont 50a est identique à celui-ci à la seule différence qu'il est connecté à la masse secteur et non la masse flottante 59.

Le circuit de contrôle 50b fonctionnant sur batterie comporte un premier amplificateur opérationnel 51, et un second amplificateur opérationnel 52, le premier amplificateur opérationnel 51 et le second amplificateur opérationnel 52 étant montés en cascade.

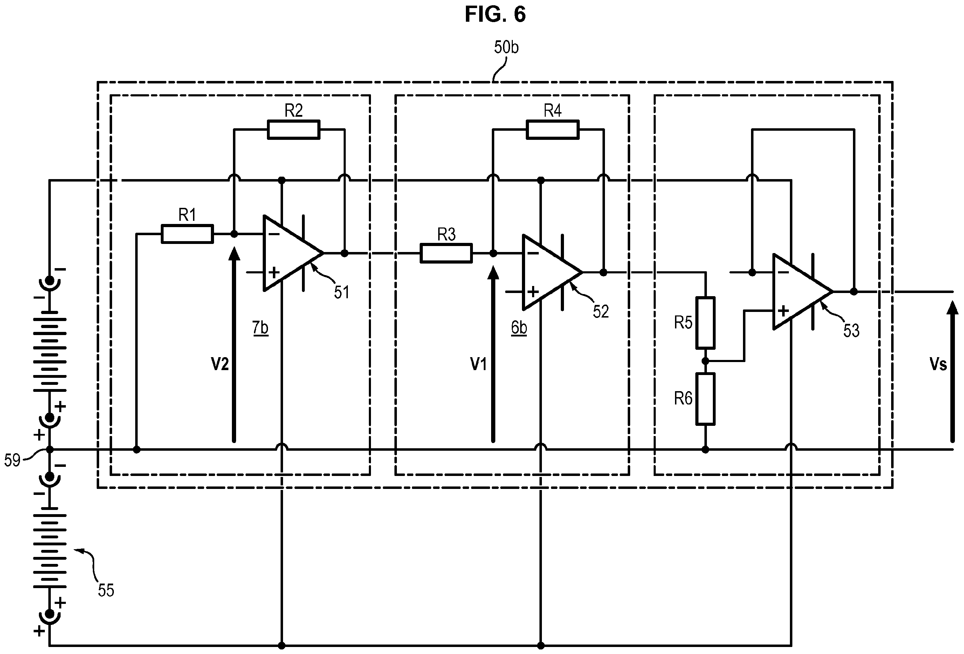

L'entrée non inverseuse du premier amplificateur opérationnel 51 est reliée à l'électrode de référence 7b. Sur la figure 6, le potentiel de l'électrode de référence est noté V2.

L'électrode de référence 7b est connectée entre l'entrée non-inverseuse du premier amplificateur opérationnel 51 et la masse flottante 59.

L'entrée inverseuse du premier amplificateur opérationnel 51 est reliée à la masse flottante 59 par l'intermédiaire d'une première résistance R1.

La sortie du premier amplificateur opérationnel 51 est reliée à son entrée inverseuse par l'intermédiaire d'une seconde résistance R2.

La sortie du premier amplificateur opérationnel 51 est reliée à l'entrée inverseuse du second amplificateur opérationnel 52 par l'intermédiaire d'une troisième résistance R3.

La sortie du second amplificateur opérationnel 52 est reliée à son entrée inverseuse par l'intermédiaire d'une quatrième résistance R4.

L'entrée non-inverseuse du second amplificateur opérationnel 52 est reliée à l'électrode de commande 6b. Sur la figure 6, le potentiel de l'électrode de commande est noté V1.

L'électrode de commande 6b est connectée entre l'entrée non-inverseuse du second amplificateur opérationnel 52 et la masse flottante59.

La fonction de transfert du premier amplificateur opérationnel 51 est donc égale à V2(1+R2/R1).

Les quatre résistances R1, R2, R3 et R4 sont identiques et typiquement égale à 51kΩ.

La fonction de transfert du second amplificateur opérationnel 52 est donc: égale à 2(V2-V1). On obtient donc bien une amplification différentielle en sortie du second amplificateur opérationnel 52 avec un gain de 2.

Afin d'avoir une fonction de transfert avec un gain de 1 au lieu de 2, le circuit de contrôle 50b fonctionnant sur batterie comporte en outre en sortie du second amplificateur opérationnel 52 un étage diviseur de tension.

L'étage diviseur de tension comporte un troisième amplificateur opérationnel 53 dont l'entrée non-inverseuse est reliée à la sortie du second amplificateur opérationnel 52 par l'intermédiaire d'une cinquième résistance R5, et à la masse flottante 59 par l'intermédiaire d'une sixième résistance R6, la cinquième résistance R5 et la sixième résistance R6 étant égale. Sur la figure 6, le potentiel en sortie du troisième amplificateur opérationnel 53 est noté Vs.

L'étage diviseur de tension divise donc la tension en sortie du second amplificateur opérationnel 52 par un coefficient 2, ce qui permet d'obtenir en sortie du troisième amplificateur opérationnel 53 une mesure de la différence de potentiel entre l'électrode de référence 7b et l'électrode de commande 6b :Vs=(V2-V1).

Le circuit de contrôle amont 50a est identique à celui-ci à la seule différence qu'il est connecté à la masse secteur et non la masse flottante 59.

Le circuit de contrôle 50b présente l'avantage d'avoir une impédance d'entrée théorique infinie. L'impédance d'entrée du circuit de contrôle 50b est préférentiellement supérieure à 10^10 Ohms et encore plus préférentiellement supérieure à 10^12 Ohms, pour une tension de champ longitudinal de l'ordre de 50Volts. En pratique l'impédance d'entrée du circuit de contrôle 50b est typiquement de l'ordre de 3.10^12 Ohms. Le circuit de contrôle 50b permet donc d'éliminer les besoins d'adaptation en impédance.

Le circuit de contrôle 50b est un amplificateur d'instrumentation à haute tension de mode commun et à haute impédance d'entrée.

Il est à noter qu'un montage suiveur classique n'aurait pas pu être utilisé à la place du circuit de contrôle 50b, car les amplificateurs opérationnels seraient détruits par le niveau de tension de mode commun. En effet, celui-ci deviendrait supérieur à la valeur maximum autorisée par les entrées de ces amplificateurs.

Il est à noter qu'un montage soustracteur classique n'aurait pas non plus pu être utilisé à la place du circuit de contrôle 50b, car dans un montage soustracteur classique l'impédance d'entrée est relativement faible, ce qui n'est pas compatible avec la mesure de courants de faible intensité avec une forte fluctuation de la tension de mode commun.

### Procédé d'analyse microfluidique

Le dispositif d'analyse microfluidique 1 peut notamment être mettre en oeuvre le procédé d'analyse microfluidique décrit ci-dessous, comportant les étapes suivantes :
- l'injection d'un électrolyte contenant des analytes dans le canal de séparation 10 ;
- génération d'un champ longitudinal dans le canal de séparation 10 ;
- polarisation de la couche polarisable supérieure 11 par application d'une tension de polarisation aux bornes des électrodes de commande 6a, 6b ;
- contrôle de la vitesse du flux électroosmotique dans le canal de séparation 10 par modulation de la tension de polarisation aux bornes des électrodes de commande 6a, 6b.

Au cours de l'étape de contrôle de la vitesse du flux électroosmotique dans le canal de séparation 10, le circuit de contrôle amont 50a impose une différence de potentiel fixe entre l'électrode de commande amont 6a et l'électrode de référence amont 7a, tandis que le circuit de contrôle aval 50b impose une différence de potentiel fixe entre l'électrode de commande aval 6b et l'électrode de référence aval 7b. La valeur de cette différence de potentiel est limitée par la plage de polarisation de la couche polarisable supérieure 11. Cette valeur contrôle directement la modulation de la charge de surface et donc le flux électroosmotique.

### Injection d'un électrolyte contenant des analytes dans le canal de séparation 10

Le système matriciel d'électrovannes 17 commande l'introduction de l'électrolyte dans le réseau fluidique 100, par le biais d'une pression hydrodynamique fixée par un manomètre.

L'électrolyte est initialement stocké dans le récipient réserve 15. Après avoir traversé le canal de séparation, l'électrolyte est stocké dans le récipient de stockage 16.

L'étape d'injection d'un électrolyte contenant des analytes dans le canal de séparation 10 comporte les sous étapes suivantes :
- Pré-remplissage ;
- Evacuation des bulles ;
- Mise sous flux hydrodynamique ;
- Séparation par électrophorèse.

### Pré-remplissage

Le dispositif d'analyse microfluidique 1 est positionnée dans un porte-puce (non représenté). Lors d'une étape de pré-remplissage, les quatre réservoirs 25 et 26 du dispositif d'analyse microfluidique 1 sont remplis d'électrolyte (avec une seringue par exemple). L'étape de pré-remplissage dure environ 15-20 minutes.

### Evacuation des bulles

Lors d'une étape d'évacuation des bulles, au cours de laquelle les éventuelles bulles présentes dans le circuit fluidique 100 sont évacuées en alternant la configuration d'écoulement dans un sens dans laquelle le récipient de réserve 15 est connecté aux deux réservoirs gauche, la configuration d'écoulement dans l'autre sens dans laquelle le récipient de réserve 15 est connecté aux deux réservoirs droit et la configuration d'équilibrage dans laquelle le récipient de réserve 15 est connecté aux quatre réservoirs 25a, 25b, 26a et 26b. Une centaine d'alternance de configuration sont appliquées au dispositif d'analyse microfluidique 1.

La disparition totale des bulles est vérifiée visuellement avec un microscope inversé.

### Mise sous flux hydrodynamique

Lors d'une étape de mise sous flux hydrodynamique, les quatre réservoirs 25a, 25b, 26a et 26b sont connectés au récipient de réserve 15 contenant l'électrolyte et au récipient de stockage 16 vide.

On procède à une mise sous flux hydrodynamique en mettant, dans un premier temps, le récipient de réserve 15 contenant l'électrolyte en connexion avec l'un des réservoirs amont et un des réservoirs aval, puis dans un deuxième temps avec les deux autres.

La mise sous flux hydrodynamique engendre un écoulement de l'électrolyte dans le circuit fluidique 100 du récipient de réserve 15 jusqu'au récipient de stockage 16.

### Séparation par électrophorèse

Le récipient de réserve 15 est mis sous pression par système matriciel d'électrovannes 17. L'électrolyte initialement contenu dans le récipient de réserve 15 est injecté dans le réservoir secondaire amont 25a ou 25b de manière à circuler dans le réseau fluidique 100 jusqu'au réservoir aval 26a et 26b avant d'être stocké dans le récipient de stockage 16.

Lors de l'étape de séparation par électrophorèse, le réservoir 15 est relié à tous les réservoirs secondaires 25a, 25b, 26a et 26b de manière à obtenir un équilibre des pressions.

La matrice d'électrovanne est programmée pour la mesure de la charge de surface, par exemple en utilisant l'anémométrie particulaire (la vitesse des microbilles fluorescentes permet de connaître le flux électroosmotique et donc la charge de surface imposée par le transistor fluidique).

### Génération d'un champ longitudinal dans le canal de séparation 10

Le champ longitudinal dans le canal de séparation 10 est généré par application d'une tension entre les électrodes 8a, 8b de champ longitudinal. La tension appliquée entre les électrodes 8a, 8b de champ longitudinal est typiquement de l'ordre de 50 volts.

Sous l'effet d'un champ électrique longitudinal, les particules et molécules chargées ou non se déplacent dans l'électrolyte avec une vitesse définie à la fois par le champ, par la masse, par électroosmose et par la charge éventuelle des particules. Ce phénomène est appelé électrophorèse. La vitesse des particules dans l'électrolyte est proportionnelle au champ électrique, la constante de proportionnalité étant nommée mobilité apparente (somme des mobilités électrophorétique et électroosmotique).

### Polarisation de la surface polarisable 11

La surface polarisable 11 est polarisée par application d'une tension de polarisation aux bornes des électrodes de commande 6a, 6b.

Sur les parois du canal de séparation 10, une double couche ionique formée d'une couche d'ions fixe, correspondant à la charge de surface, et d'une couche d'ions mobile, correspondant à une couche diffuse dans le liquide, se forme spontanément.

Sous l'action du champ électrique longitudinal, les ions de la couche mobile migrent, entraînant un mouvement global de l'électrolyte par viscosité. On parle d'électro-osmose.

L'électrolyte se déplace d'un seul bloc et sa vitesse est proportionnelle au champ électrique. La constante de proportionnalité entre la vitesse du fluide et le champ électrique est appelé mobilité électroosmotique.

La tension de polarisation appliquée entre les électrodes de commande 6a, 6b et les électrodes de référence 7a, 7b permet de moduler la charge de la surface polarisable 11.

La tension de polarisation aux bornes des électrodes de commande 6a, 6b est typiquement de l'ordre de +/- 2 volts.

### Contrôle de la vitesse du flux électroosmotique dans le canal de séparation 10

La mesure de la différence de potentiel entre l'électrode de référence 7a, 7b et l'électrode de commande 6a, 6b est utilisée pour ajuster la tension de polarisation appliquée à la surface polarisable 11, de manière à contrôler la vitesse du flux dans le canal de séparation 10.

Tout au long de l'étape de mesure et du contrôle de la vitesse du flux électroosmotique dans le canal de séparation 10, le circuit de contrôle 50a (respectivement 50b) impose une différence de potentiel fixe entre le potentiel de l'électrode de commande 6a (respectivement 6b) et l'électrolyte de référence 6a (respectivement 6b) manière à ce que la surface polarisable 11 reste dans sa fenêtre de polarisabilité.

Le fait d'imposer une différence de potentiel fixe entre le potentiel de l'électrode de commande 6a (respectivement 6b) et l'électrolyte permet de limiter les courants de fuite entre les électrodes de commandes 6a (respectivement 6b) et les électrodes de champ longitudinal 8a, 8b qui nuisent au contrôle et à la qualité du transport des analytes lors du processus de migration électrophorétique. Ces courants de fuite deviennent négligeables, si l'électronique de commande est parfaitement adaptée et si le matériau de l'interface polarisable possède les bonnes propriétés électriques.

A cet effet, le circuit de contrôle 50a (respectivement 50b) impose à l'entrée du générateur 55 le potentiel de l'électrode de référence 7a (respectivement 7b), tandis que le générateur 55 impose une différence de potentiel fixe entre l'électrode de commande 6a (respectivement 6b) et l'électrode de référence 7a (respectivement 7b). La différence de potentiel entre l'électrode de commande 6a (respectivement 6b) et l'électrode de référence 7a (respectivement 7b) est typiquement fixée à une valeur comprise entre [+2volts ;-2volts].

Le dispositif d'analyse 1 peut notamment être utilisé pour moduler le flux dans le canal de séparation 10 dans les deux directions (mobilité positive ou négative ou nulle). Le dispositif d'analyse 1 peut donc être utilisé comme vanne d'écoulement ou comme pompe.

### Mesure de la vitesse du flux électroosmotique dans le canal de séparation 10

L'action concomitante de la migration électrophorétique (vitesse des particules et des biomolécules dans l'électrolyte) et du flux électroosmotique (vitesse de l'électrolyte) assure le transport des analytes dans le canal de séparation 10.

Le dispositif d'analyse microfluidique 100 permet de mesurer et de contrôler la vitesse du flux électroosmotique dans le canal de séparation 10 en présence d'un champ électrique à travers le canal de séparation 10.

La vitesse du flux électroosmotique dans le canal de séparation 10 est par exemple calculée en utilisant le principe de mesure du pont de Wheatstone fluidique décrit ci-dessous.

La figure 2 est une vue d'ensemble du réseau 100 en pont de Wheatstone microfluidique.

Le pont de Wheatstone fluidique permet de déterminer la résistance fluidique du canal de séparation 10.

La détermination de la résistance fluidique du canal de séparation 10 où s'effectue l'électrophorèse comporte les étapes suivantes :
- mesure des quatre résistances fluidiques des quatre canaux de raccordement 35a, 36a, 35b, 36b,
- déduction de la résistance fluidique du canal de séparation 10 où s'effectue l'électrophorèse à partir des mesures des quatre résistances fluidiques des quatre canaux de raccordement 35a, 36a, 35b, 36b.

La vitesse du flux électroosmotique dans le canal de séparation 10 pourrait également être calculée par vélocimétrie à imagerie de particules (PIV) ou par l'introduction et la détection d'un marqueur neutre (par exemple le thiocarbamide ou thiourée) qui se déplace avec le flux électroosmotique.

## Revendications

1. Dispositif d'analyse microfluidique (1) comportant :
- un substrat (20) dans lequel est ménagé un canal de séparation (10) dans lequel circule un électrolyte, une partie du canal de séparation (10) étant recouvert d'une surface polarisable (11) ;
- deux électrodes de champ longitudinal (8a, 8b) disposées de part et d'autre du canal de séparation (10);
- au moins une électrode de commande (6a, 6b) positionnée dans le canal de séparation (10), les électrodes de commande (6a, 6b) étant adaptées pour polariser la surface polarisable (11) de manière à contrôler la vitesse du flux électroosmotique dans le canal de séparation (10) ;
le dispositif d'analyse microfluidique (1) étant **caractérisé en ce que** la surface polarisable (11) comporte une sous-couche isolante (12) en carbure de silicium (a-SiC) amorphe et une couche polarisable supérieure (13) en contact direct avec l'électrolyte, les électrodes de commande (6a, 6b) étant positionnées entre la sous-couche isolante (12) en carbure de silicium (a-SiC) amorphe et la couche polarisable supérieure (13).

2. Dispositif d'analyse microfluidique (1) selon la revendication précédente, dans lequel la couche polarisable supérieure (13) est en carbone azoté (CNx).

3. Dispositif d'analyse microfluidique (1) selon l'une des revendications précédentes, **caractérisé en ce qu'**il comporte en outre :
- une électrode de référence (7a, 7b) adaptée pour mesurer le potentiel de l'électrolyte dans le canal de séparation (10) ;
- un circuit de contrôle (50a, 50b) adapté pour ajuster le potentiel de l'électrode de commande (6a, 6b) en fonction du potentiel de l'électrolyte mesuré par l'électrode de référence (7a, 7b), de manière à ce que la surface polarisable (11) reste dans sa fenêtre de polarisabilité.

4. Dispositif d'analyse microfluidique (1) selon la revendication précédente, **caractérisé en ce que** le circuit de contrôle (50a, 50b) est adapté pour imposer une différence de potentiel fixe entre l'électrode de commande (6a, 6b) et l'électrode de référence (7a, 7b).

5. Dispositif d'analyse microfluidique (1) selon l'une des revendications précédentes, **caractérisé en ce qu'**il comporte au moins :
- une électrode de commande amont (6a) positionnée en amont du canal ;
- une électrode de commande aval (6b) positionnée en aval du canal ;
- une électrode de référence amont (7a) positionnée en amont du canal ;
- une électrode de référence aval (7b) positionnée en aval du canal ; l'électrode de commande amont (6a) est connectée par un circuit de contrôle amont (50a) à l'électrode de référence amont (7a), l'électrode de commande aval (6b) étant connectée par un circuit de contrôle aval (50b) à l'électrode de référence aval (7b), le circuit de contrôle amont (50a) étant adapté pour ajuster le potentiel des électrodes de commande (6a, 6b) en fonction du potentiel de l'électrolyte mesuré par les électrodes de référence (7a, 7b), de manière à ce que la surface polarisable (11) reste dans sa fenêtre de polarisabilité.

6. Dispositif d'analyse microfluidique (1) selon la revendication précédente, le circuit de contrôle aval (50b) étant connecté à une masse flottante (59) référencée à l'électrode de référence aval (7b).

7. Dispositif d'analyse microfluidique (1) selon la revendication précédente, le circuit de contrôle aval (50b) comportant un premier amplificateur opérationnel (51), et un second amplificateur opérationnel (52), l'électrode de référence aval (7b) est connectée entre l'entrée non-inverseuse du premier amplificateur opérationnel (51) et la masse flottante (59), et l'électrode de commande aval (6b) étant connectée entre l'entrée non-inverseuse du second amplificateur opérationnel (52) et la masse flottante (59).

8. Procédé d'analyse microfluidique mis en oeuvre par un dispositif d'analyse microfluidique (1) selon l'une des revendications précédentes comportant des étapes de :
- injection d'un électrolyte contenant des analytes dans le canal de séparation (10) ;
- génération d'un champ longitudinal dans le canal de séparation (10) ;
- polarisation de la surface polarisable (11) par application d'une tension de polarisation aux bornes des électrodes de commande (6a, 6b) et contrôle de la vitesse du flux électroosmotique dans le canal de séparation (10) par modulation de la tension de polarisation aux bornes des électrodes de commande (6a, 6b).

9. Procédé d'analyse microfluidique selon la revendication précédente mis en oeuvre par un dispositif d'analyse microfluidique (1) selon l'une des revendications 2 à 7, **caractérisé en ce que** au cours de l'étape de contrôle de la vitesse du flux électroosmotique dans le canal de séparation (10), on ajuste tension de polarisation aux bornes des électrodes de commande (6a, 6b) en fonction du potentiel de l'électrolyte mesuré par l'électrode de référence (7a, 7b), de manière à ce que la surface polarisable (11) reste dans sa fenêtre de polarisabilité.

10. Procédé d'analyse microfluidique selon la revendication précédente mis en oeuvre par un dispositif d'analyse microfluidique (1) selon l'une des revendications 4 à 7, **caractérisé en ce que** au cours de l'étape de contrôle de la vitesse du flux électroosmotique dans le canal de séparation (10), on impose une différence de potentiel fixe entre l'électrode de commande amont (6a) et l'électrode de référence amont (7a), et entre l'électrode de commande aval (6b) et l'électrode de référence aval (7b).

## Patentansprüche

1. Mikrofluidische Analysevorrichtung (1), umfassend:
- ein Substrat (20), in dem ein Trennkanal (10) untergebracht ist, in dem ein Elektrolyt zirkuliert, wobei ein Teil des Trennkanals (10) mit einer polarisierbaren Oberfläche (11) bedeckt ist;
- zwei längs gerichtete Feldelektroden (8a, 8b), die auf beiden Seiten des Trennkanals (10) angeordnet sind;
- mindestens eine Steuerelektrode (6a, 6b), die im Trennkanal (10) positioniert ist, wobei die Steuerelektroden (6a, 6b) ausgelegt sind, um die polarisierbare Oberfläche (11) derart zu polarisieren, dass die Geschwindigkeit des elektroosmotischen Flusses im Trennkanal (10) gesteuert wird;
wobei die mikrofluidische Analysevorrichtung (1) **dadurch gekennzeichnet ist, dass** die polarisierbare Oberfläche (11) eine isolierende darunter liegende Schicht (12) aus amorphem Siliciumcarbid (a-SiC) und eine obere polarisierbare Schicht (13) in direktem Kontakt mit dem Elektrolyten umfasst, wobei die Steuerelektroden (6a, 6b) zwischen der isolierenden darunter liegenden Schicht (12) aus amorphem Siliciumcarbid (a-SiC) und der oberen polarisierbaren Schicht (13) positioniert sind.

2. Mikrofluidische Analysevorrichtung (1) nach dem vorhergehenden Anspruch, wobei die obere polarisierbare Schicht (13) aus stickstoffhaltigem Kohlenstoff (CNx) ist.

3. Mikrofluidische Analysevorrichtung (1) nach einem der vorhergehenden Ansprüche, **dadurch gekennzeichnet, dass** sie außerdem Folgendes umfasst:
- eine Referenzelektrode (7a, 7b), die ausgelegt ist, um das Potenzial des Elektrolyten im Trennkanal (10) zu messen;
- einen Steuerkreislauf (50a, 50b), der ausgelegt ist, um das Potenzial der Steuerelektrode (6a, 6b) je nach dem Potenzial des Elektrolyten, gemessen von der Referenzelektrode (7a, 7b), einzustellen, so dass die polarisierbare Oberfläche (11) in ihrem Polarisierbarkeitsfenster bleibt.

4. Mikrofluidische Analysevorrichtung (1) nach dem vorhergehenden Anspruch, **dadurch gekennzeichnet, dass** der Steuerkreislauf (50a, 50b) ausgelegt ist, um eine fixe Potenzialdifferenz zwischen der Steuerelektrode (6a, 6b) und der Referenzelektrode (7a, 7b) durchzusetzen.

5. Mikrofluidische Analysevorrichtung (1) nach einem der vorhergehenden Ansprüche, **dadurch gekennzeichnet, dass** sie mindestens Folgendes umfasst:
- eine vorgelagerte Steuerelektrode (6a), die vorgelagert vom Kanal positioniert ist;
- eine nachgelagerte Steuerelektrode (6b), die nachgelagert vom Kanal positioniert ist;
- eine vorgelagerte Referenzelektrode (7a), die vorgelagert vom Kanal positioniert ist;
- eine nachgelagerte Referenzelektrode (7b), die nachgelagert vom Kanal positioniert ist;
wobei die vorgelagerte Steuerelektrode (6a) durch einen vorgelagerten Steuerkreislauf (50a) mit der vorgelagerten Referenzelektrode (7a) verbunden ist, wobei die nachgelagerte Steuerelektrode (6b) durch einen nachgelagerten Steuerkreislauf (50b) mit der nachgelagerten Referenzelektrode (7b) verbunden ist, wobei der vorgelagerte Steuerkreislauf (50a) ausgelegt ist, um das Potenzial der Steuerelektroden (6a, 6b) je nach dem Potenzial des Elektrolyten, gemessen von der Referenzelektrode (7a, 7b), einzustellen, so dass die polarisierbare Oberfläche (11) in ihrem Polarisierbarkeitsfenster bleibt.

6. Mikrofluidische Analysevorrichtung (1) nach dem vorhergehenden Anspruch, wobei der nachgelagerte Steuerkreislauf (50b) mit einer Schwingmasse (59) verbunden ist, die mit der nachgelagerten Referenzelektrode (7b) referenziert ist.

7. Mikrofluidische Analysevorrichtung (1) nach dem vorhergehenden Anspruch, wobei der nachgelagerte Steuerkreislauf (50b) einen ersten Operationsverstärker (51) und einen zweiten Operationsverstärker (52) umfasst, wobei die nachgelagerte Referenzelektrode (7b) zwischen dem nicht invertierenden Eingang des ersten Operationsverstärkers (51) und der Schwingmasse (59) verbunden ist und wobei die nachgelagerte Steuerelektrode (6b) zwischen dem nicht invertierenden Eingang des zweiten Operationsverstärkers (52) und der Schwingmasse (59) verbunden ist.

8. Mikrofluidisches Analyseverfahren, durchgeführt durch eine mikrofluidische Analysevorrichtung (1) nach einem der vorhergehenden Ansprüche, umfassend die folgenden Schritte:
- Injizieren eines Elektrolyten, enthaltend Analyten, in den Trennkanal (10);
- Generieren eines längs gerichteten Felds im Trennkanal (10);
- Polarisieren der polarisierbaren Oberfläche (11) durch Anwenden einer Polarisierungsspannung auf die Klemmen der Steuerelektroden (6a, 6b) und Steuerung der Geschwindigkeit des elektroosmotischen Flusses im Trennkanal (10) durch Modulieren der Polarisierungsspanung auf die Klemmen der Steuerelektroden (6a, 6b).

9. Mikrofluidisches Analyseverfahren nach dem vorhergehenden Anspruch, durchgeführt durch eine mikrofluidische Analysevorrichtung (1) nach einem der Ansprüche 2 bis 7, **dadurch gekennzeichnet, dass** im Laufe des Schritts des Steuerns der Geschwindigkeit des elektroosmotischen Flusses im Trennkanal (10) die Polarisierungsspannung auf die Klemmen der Steuerelektroden (6a, 6b) je nach dem Potenzial des Elektrolyten, gemessen von der Referenzelektrode (7a, 7b), derart eingestellt wird, dass die polarisierbare Oberfläche (11) in ihrem Polarisierbarkeitsfenster bleibt.

10. Mikrofluidisches Analyseverfahren nach dem vorhergehenden Anspruch, durchgeführt durch eine mikrofluidische Analysevorrichtung (1) nach einem der Ansprüche 4 bis 7, **dadurch gekennzeichnet, dass** im Laufe des Schritts des Steuerns der Geschwindigkeit des elektroosmotischen Flusses im Trennkanal (10) eine fixe Potenzialdifferenz zwischen der vorgelagerten Steuerelektrode (6a) und der vorgelagerten Referenzelektrode (7a) und zwischen der nachgelagerten Steuerelektrode (6b) und der nachgelagerten Elektrode (7b) durchgesetzt wird.

## Claims

1. Microfluidic analysis device (1) comprising:
- a substrate (20) in which a separation channel (10) is formed in which an electrolyte circulates, a part of the separation channel (10) being covered by a polarisable surface (11);
- two longitudinal field electrodes (8a, 8b) located on each side of the separation channel (10);
- at least one control electrode (6a, 6b) positioned in the separation channel (10), the control electrodes (6a, 6b) being adapted to polarise the polarisable surface (11) so as to control the electroosmotic flow velocity in the separation channel (10) ;
the microfluidic analysis device (1) being **characterised in that** the polarisable surface (11) comprises an insulating sub-layer (12) made of amorphous silicon carbide (a-SiC) and a polarisable upper layer (13) in direct contact with the electrolyte, the control electrodes (6a, 6b) being positioned between the insulating sublayer (12) made of amorphous silicon carbide (a-SiC) and the polarisable upper layer (13).

2. Microfluidic analysis device (1) according to the previous claim, in which the polarisable upper layer (13) is made of carbon nitride (CNx).

3. Microfluidic analysis device (1) according to one of the previous claims, **characterised in that** it also comprises:
- a reference electrode (7a, 7b) adapted to measure the potential of the electrolyte in the separation channel (10);
- a control circuit (50a, 50b) adapted to adjust the potential of the control electrode (6a, 6b) as a function of the potential of the electrolyte measured by the reference electrode (7a, 7b) such that the polarisable surface (11) remains within its polarisability window.

4. Microfluidic analysis device (1) according to the previous claim, **characterised in that** the control circuit (50a, 50b) is adapted to impose a fixed potential difference between the control electrode (6a, 6b) and the reference electrode (7a, 7b).

5. Microfluidic analysis device (1) according to one of the previous claims, **characterised in that** it comprises at least:
- one upstream control electrode (6a) positioned upstream from the channel;
- one downstream control electrode (6b) positioned downstream from the channel;
- one upstream reference electrode (7a) positioned upstream from the channel;
- one downstream reference electrode (7b) positioned downstream from the channel;
the upstream control electrode (6a) is connected through an upstream control circuit (50a) to the upstream reference electrode (7a), the downstream control electrode (6b) being connected through a downstream control circuit (50b) to the downstream reference electrode (7b), the upstream control circuit (50a) being adapted to adjust the potential of the control electrodes (6a, 6b) as a function of the electrolyte potential measured by the reference electrodes (7a, 7b) such that the polarisable area (11) remains within its polarisability window.

6. Microfluidic analysis device (1) according to the previous claim, the downstream control circuit (50b) being connected to a floating ground (59) referenced to the downstream electrode (7b).

7. Microfluidic analysis device (1) according to the previous claim, the downstream control circuit (50b) comprising a first operational amplifier (51), and a second operational amplifier (52), the downstream reference electrode (7b) is connected between the noninverting input of the first operational amplifier (51) and the floating ground (59), and the downstream control electrode (6b) being connected between the noninverting input of the second operational amplifier (52) and the floating ground (59)

8. Microfluidic analysis method used by a microfluidic analysis device (1) according to one of the previous claims, comprising the following steps:
- injection of an electrolyte containing analytes into the separation channel (10);
- generation of a longitudinal field in the separation channel (10);
- polarisation of the polarisable surface (11) by application of a polarisation voltage to the terminals of the control electrodes (6a, 6b) and control of the electroosmotic flow velocity in the separation channel (10) by modulation of the polarisation voltage at the terminals of the control electrodes (6a, 6b).

9. Microfluidic analysis method according to the previous claim used by a microfluidic analysis device (1) according to one of claims 2 to 7, **characterised in that** during the step to control the electroosmotic flow velocity in the separation channel (10), the polarisation voltage at the terminals of the control electrodes (6a, 6b) is adjusted as a function of the electrolyte potential measured by the reference electrode (7a, 7b), such that the polarisable area (11) remains within its polarisability window.

10. Microfluidic analysis method according to the previous claim used by a microfluidic analysis device (1) according to one of claims 4 to 7, **characterised in that** during the step to control the electroosmotic flow velocity in the separation channel (10), a fixed potential difference is imposed between the upstream control electrode (6a) and the upstream reference electrode (7a), and between the downstream control electrode (6b) and the downstream reference electrode (7b) .
